(19) 

(11) **EP 4 800 657 A1**

(12) **EUROPEAN PATENT APPLICATION**

(43) Date of publication: **02.09.2026 Bulletin 2026/36**

(21) Application number: **25160391.6**

(22) Date of filing: **26.02.2025**

(51) International Patent Classification (IPC): ***G06V 10/26*** *(2022.01)* ***G06V 10/764*** *(2022.01)* ***G06V 10/82*** *(2022.01)* ***G06V 20/58*** *(2022.01)* ***G06V 20/64*** *(2022.01)*

(52) Cooperative Patent Classification (CPC): **G06V 10/82; G06V 10/26; G06V 10/764; G06V 20/58; G06V 20/64**

(84) Designated Contracting States: **AL AT BE BG CH CY CZ DE DK EE ES FI FR GB GR HR HU IE IS IT LI LT LU LV MC ME MK MT NL NO PL PT RO RS SE SI SK SM TR**
Designated Extension States: **BA**
Designated Validation States: **GE KH MA MD TN**

(71) Applicants:
- **TOYOTA JIDOSHA KABUSHIKI KAISHA Toyota-shi, Aichi-ken, 471-8571 (JP)**
- **Max-Planck-Gesellschaft zur Förderung der Wissenschaften e.V. 80539 München (DE)**

(72) Inventors:
- **OLMEDA REINO, Daniel 1140 BRUSSELS (BE)**
- **AL JUNDI, Rahaf 1140 BRUSSELS (BE)**
- **LI, Zhi 66123 SAARBRUECKEN (DE)**
- **SCHIELE, Bernt 66123 SAARBRUECKEN (DE)**

(74) Representative: **Cabinet Beau de Loménie 103, rue de Grenelle 75340 Paris Cedex 07 (FR)**

Remarks:
Amended claims in accordance with Rule 137(2) EPC.

(54) **METHOD FOR DETERMINING 3D OCCUPANCY PREDICTIONS OF A SCENE USING A 3D OCCUPANCY PREDICTION NETWORK**

(57) A method for training a 3D occupancy prediction network , said method comprising
a. Obtaining (S1) a plurality of input images ($I_k$) of a scene,
b. Extracting (S3), a relative depth information for 3D points of a target image ($I_{target}$),
c. Obtaining (S4), an absolute depth information ($D_{target}$) of said target image ($I_{target}$),
d. Obtaining (S5) a reconstructed target image using said absolute depth information ($D_{target}$),
e. Obtaining (S6), semantic information of pixels of said target image ($I_{target}$) and semantic information of pixels of said reconstructed target image ($\hat{I}_{target}$),
f. Selecting (S7) pixels (u') of said target image whose semantic information is the same in said target image ($I_{target}$) and in said reconstructed target image ($\hat{I}_{target}$),
g. optimizing (S8) a semantic loss ( $\mathcal{L}_{sem-refine}$ ) function as a binary cross entropy applied on patches ( $S_i'(u_i')$ ) and reconstructed patches ( $\hat{S}_i'(u_i')$ ) of said selected pixels,
h. optimizing (S9) a depth supervision loss ( $\mathcal{L}_{depth}$ ) function



Processed by Luminess, 75001 PARIS (FR)

**(Cont. next page)**

100
110
depth
anything
150
160
130
density
decoder $\phi_D$
$\sigma$
thresholding
occupancies
fusion
shared
volumetric
features
sampled feats
&
pos. encoding
spatial & cross-task
attention
single-view
input
2D
semantic
segmenter
semantic
decoder $\phi_s$
s
120
140

FIG.4

## Description

BACKGROUND OF THE INVENTION

1. Field of the invention

The present disclosure relates to 3D occupancy prediction and can find an application in autonomous driving systems for instance.

2. Description of Related Art

Accurate 3D scene understanding is crucial for building reliable autonomous driving systems. The task of 3D occupancy prediction proposed in recent years leverages 2D images to capture rich 3D spatial and semantic information, providing critical scene context for autonomous driving perception and planning while reducing the reliance on costly LiDAR sensors. However, training fully supervised 3D occupancy prediction networks requires accurate 3D ground truth (e.g., dense LiDAR data with semantic labels), which is costly and error-prone to collect at scale. Additionally, many existing methods require multi-view or multi-frame images as inputs during inference, which limits flexibility and increases system costs by necessitating specific camera setups and calibration processes. To develop more adaptable and affordable systems, it is advantageous to use approaches that can be trained with only 2D labels and require only single-view inputs for inference. However, this setup amplifies the inherent difficulty of 3D occupancy estimation, as it demands robust self-supervised methods to compensate for the lack of explicit 3D information and to address the ill-posed nature of the single-view task.

Existing approaches generally achieve self-supervision of 3D occupancy prediction by distilling multi-view 2D information into 3D with neural rendering, in which continuous neural density fields together with semantic fields are learned from posed images and 2D semantic (pseudo) labels, avoiding the need for 3D groundtruth. However, distilling from 2D into 3D can be capped to the information bottleneck due to limited expressiveness of 2D, and the noise in 2D pseudo labels further adds to the challenge. Existing methods whose distillation relies on simple learning from limited and noisy 2D pseudo labels often fail to capture some certain small "thing" classes (e.g. bicycle, motorcycle, person) which are safety-critical but challenging and appears rarer in the training set, and demonstrate unfaithful geometry reconstruction on the side view.

SUMMARY

The object of the present invention is to at least substantially remedy the above-mentioned drawbacks.

In this respect, the present disclosure relates to a method for training a 3D occupancy prediction network said method comprising

- Obtaining a plurality of input images of a scene captured by a plurality of cameras,
- Extracting, with a trained depth estimation module, a relative depth information for 3D points of a target image among said plurality of input images,
- Obtaining, from said relative depth information, an absolute depth information of said target image,
- Obtaining, from one source image among said plurality of input images, a reconstructed target image for said target image using said absolute depth information,
- Obtaining, 1 semantic information of pixels of said target image and semantic information of pixels of said reconstructed target image,
- Selecting pixels of said target image whose semantic information is the same in said target image and in said reconstructed target image,
- Optimizing a semantic loss function of the 3D occupancy prediction network as a binary cross entropy applied on patches and reconstructed patches of said selected pixels
- Optimizing a depth supervision loss function by refining the absolute depth information on a rendered depth map.

The self-supervised 3D occupancy prediction network is trained with only 2D supervisory signals. Self-supervision can be achieved by supervising the rendered RGB images and predicted semantic information with only 2D labels.

Direct predictions $S_i$ from off-the-shelf semantic prediction networks can contain a lot of noise. With Multiview images available during training, the proposed novel training method refines the semantic pseudo labels on the fly through Multiview consistency constraint with the help of depth estimation.

According to some embodiments, said patches are obtained using the same sampling probability on all the classes of said semantic information.

A novel semantic guided class-balanced patch sampling to stabilise the training on class-imbalanced datasets is computed. To get a sampled patch from the sampled patches of a target image, instead of random sampling adopted in previous state-of-the-art works which results in a lot more patches on big "stuff" classes and more frequently appearing classes, the same sampling probability on the all classes that exist in the target image is enforced, yielding class balanced patches.

According to some embodiments, the method comprises computing a final loss equal to the weighted sum of said semantic loss, said depth supervision loss, a photometric discrepancy loss, and a regularization loss.

According to some embodiments, obtaining, from said relative depth information, an absolute depth information of said target image, is performed using two convolutional layers trained in a self-supervised way using a photometric re-projection loss between said target image and said reconstructed target image.

According to some embodiments, obtaining said reconstructed target image comprises:

- projecting 2D pixels of said target image to 3D points using said absolute depth information, and parameters of a camera used for obtaining said target image,
- projecting said 3D points on said source image to associate with said 3D points colors of said corresponding source image projected points, for obtaining said reconstructed target image

The present disclosure concerns also a method for determining 3D occupancy predictions of a scene using a 3D occupancy prediction network trained according to any of the embodiments of the training method disclosed in the present disclosure wherein said method comprises:

- Extracting density and semantic information for 3D points of said single-view input image,
- Associating said density and semantic information with positional encodings of said 3D points,
- Obtaining, spatially and cross density semantic aggregated features for each sample point, by

  o applying a density decoder of a linear trained attention model, for obtaining an intermediate density prediction, by using the semantic information of said sample point, and the density information of said sample point and of neighboring points of said sample point,

  o applying a semantic decoder of said linear trained attention model, for obtaining an intermediate semantic prediction, by using the density information of said sample point, and the semantic information of said sample point and of neighboring points of said sample point,

- inputting said obtained intermediate density prediction to the at least one output layer of said density decoder to obtain said density prediction for said sample point,
- inputting said obtained intermediate semantic prediction to the at least one output layer of said semantic decoder to obtain said semantic prediction for said sample point.

Interaction between geometry and semantics is increased thanks to the specific application of the linear attention model.

According to some embodiments, applying a linear attention model in a density decoder of said attention model, for obtaining an intermediate density prediction, comprises

- selecting either as keys (K) or values (V) of said linear attention model of the density decoder, the semantic information of said sample point, and
- taking for query (Q) of said attention model and for the non selected keys (K) or values (V) of said linear attention model of the density decoder, the density information of said sample point and of neighboring points of said sample points,

According to some embodiments, applying a linear attention model in a semantic decoder of said attention model, for obtaining an intermediate semantic prediction, comprises

- selecting either as keys (K) or values (V) of said linear attention model of the semantic decoder, the density information of said sample point, and
- taking as query (Q) of said linear attention model and for the non selected keys (K) or values (V) of said linear attention model of the semantic decoder, the semantic information of said sample point and of neighboring points of said sample points.

According to some embodiments, extracting density information for 3D points of said single-view input image is performed using a training method comprising:

- Obtaining pre-trained parameters (weights) $\theta_d$ of a foundation model trained for depth-estimation of an image,
- Removing the last convolution layer of said trained foundation model,
- Re-training of said foundation model without said last convolution layer to obtain new parameters $\theta'_d$,
- Obtaining said density information of said input image using said re-trained foundation model.

According to some embodiments, extracting density and semantic information for 3D points of said single-view input image, comprises

- Obtaining said semantic information by applying a semantic segmentation encoder to said input image,
- Applying a convolutional layer to a concatenation of said obtained semantic information and said obtained density information to obtain a fused density-semantic information of said input image.

According to some embodiments, the method further comprises associating said obtained fused density-semantic information with positional encodings of said 3D points.

According to some embodiments, associating said density and semantic information with positional encodings of said 3D points comprises associating said obtained fused density-semantic information with positional encodings of said 3D points.

According to some embodiments, the method comprises thresholding said obtained density prediction to cap said density prediction.

According to some embodiments, said method is implemented using a neural Radiance fields network.

According to another aspect, the present invention concerns a method for generating an autonomous driving system comprising:

- receiving sensor data from one or more sensors mounted on a vehicle,
- processing the received sensor data using a method for determining 3D occupancy predictions of a scene according to any of the embodiments disclosed, to generate a three-dimensional representation of the surrounding environment, the representation including occupancy probabilities for spatial locations within a predefined detection range and semantic labels for occupied regions of the 3D space to differentiate objects of the scene,
- computing a motion planning strategy based on the predicted 3D occupancy and associated semantic labels, wherein the strategy accounts for dynamic and static obstacles;
- generating control signals for the vehicle based on the computed motion planning strategy to enable autonomous navigation while avoiding collisions; and
- continuously updating the 3D occupancy prediction and motion planning strategy in real-time as new sensor data is received.

According to another aspect, the present invention concerns a computer program set including instructions for executing the steps of the methods of any of the embodiments of the present disclosure when said program set is executed by at least one computer.

According to another aspect, the present invention concerns a recording medium readable by at least one computer and having recorded thereon at least one computer program including instructions for executing the steps of the methods of any of the embodiments of the present disclosure.

According to another aspect, the present disclosure concerns a computer system for training a 3D occupancy prediction network predicting depth information and semantic information of pixels of an input image for executing the steps of the method according to any of the embodiments disclosed. Therefore the present disclosure concerns a computer system comprising one or several processors configured together or separately for:

a. Obtaining a plurality of input images of a scene captured by a plurality of cameras,
b. Obtaining a trained attention model configured for predicting at least depth information and semantic information of pixels of an image,
c. Extracting, with said trained attention model, a relative depth information for 3D points of a target image among said plurality of input images,
d. Applying two trained convolutional layers to lift said relative depth information to obtain an absolute depth information of said target image,
e. Obtaining, from one source image among said plurality of input images, a reconstructed target image for said target image using said absolute depth information,
f. Obtaining, with said attention model, semantic information of pixels of said target image and semantic information of pixels of said reconstructed target image,
g. Selecting pixels of said target image whose semantic information is the same in said target image and in said

reconstructed image,
h. minimizing a semantic loss of the 3D occupancy prediction network as a binary cross entropy applied on patches of and reconstructed patches of said selected pixels,
i. minimizing a depth supervision loss by refining the absolute depth information on the reconstructed depth map.

According to another aspect, the present disclosure concerns a computer system for determining 3D occupancy predictions of a scene using a 3D occupancy prediction network trained according to any of the embodiments of the training method disclosed in the present disclosure, said system being configured for executing the steps of the method according to any of the embodiments disclosed. Therefore the present disclosure concerns a computer system comprising one or several processors configured together or separately for:

- Extracting density and semantic information for 3D points of said single-view input image,
- Associating said density and semantic information with positional encodings of said 3D points,
- Obtaining, spatially and cross density semantic aggregated features for each sample point, by

  o applying a density decoder of a linear trained attention model, for obtaining an intermediate density prediction, by using the semantic information of said sample point, and the density information of said sample point and of neighboring points of said sample point,
  o applying a semantic decoder of said linear trained attention model, for obtaining an intermediate semantic prediction, by using the density information of said sample point, and the semantic information of said sample point and of neighboring points of said sample point,

- inputting said obtained intermediate density prediction to the at least one output layer of said density decoder to obtain said density prediction for said sample point,
- inputting said obtained intermediate semantic prediction to the at least one output layer of said semantic decoder to obtain said semantic prediction for said sample point.

According to another aspect, the present disclosure concerns a computer system for generating an autonomous driving system configured for executing the steps of the method for generating an autonomous driving system according to any of the embodiments disclosed. Therefore, the system comprises one or several processors configured together or separately for:

- receiving sensor data from one or more sensors mounted on a vehicle,
- processing the received sensor data using a method for determining 3D occupancy predictions of a scene according to any of the embodiments disclosed, to generate a three-dimensional representation of the surrounding environment, the representation including occupancy probabilities for spatial locations within a predefined detection range and semantic labels for occupied regions of the 3D space to differentiate objects of the scene,
- computing a motion planning strategy based on the predicted 3D occupancy and associated semantic labels, wherein the strategy accounts for dynamic and static obstacles;
- generating control signals for the vehicle based on the computed motion planning strategy to enable autonomous navigation while avoiding collisions; and
- continuously updating the 3D occupancy prediction and motion planning strategy in real-time as new sensor data is received.

According to another aspect, the present invention concerns a method for extracting density information for 3D points of a single-view input image wherein said method is trained using a training method comprising:

- Obtaining pre-trained parameters of a foundation model trained for depth-estimation of an image,
- Removing the last convolution layer of said trained foundation model,
- Re-training of said foundation model without said last convolution layer to obtain new parameters,

Said density information being obtained using said re-trained foundation model.
According to some embodiments, the method for extracting density information for 3D point of a single input image further comprises

- Obtaining semantic information of said input image by applying a trained semantic segmentation encoder to said input image,
- Applying a convolutional layer to a concatenation of said obtained semantic information and said obtained density

information to obtain a fused density-semantic information of said input image.

According to some embodiments, the method further comprises associating said obtained fused density-semantic information with positional encodings of said 3D points.

According to another aspect, the present disclosure concerns a method for determining 3D occupancy predictions of a scene using a trained 3D occupancy prediction network, said method comprising:

- Extracting (E10) density and semantic information for 3D points of said single-view input image,
- Associating (E20) said density and semantic information with positional encodings of said 3D points,
- Obtaining (E30), spatially and cross density semantic aggregated features for each sample point, by

    a. applying a density decoder of a linear trained attention model, for obtaining an intermediate density prediction, by using the semantic information of said sample point, and the density information of said sample point and of neighboring points of said sample point,

    b. applying a semantic decoder of said linear trained attention model, for obtaining an intermediate semantic prediction, by using the density information of said sample point, and the semantic information of said sample point and of neighboring points of said sample point,

- Inputting said obtained intermediate density prediction to the at least one output layer of said density decoder to obtain said density prediction for said sample point,
- Inputting said obtained intermediate semantic prediction to the at least one output layer of said semantic decoder to obtain said semantic prediction for said sample point.

## BRIEF DESCRIPTION OF THE DRAWINGS

Features, advantages, and technical and industrial significance of exemplary embodiments of the invention will be described below with reference to the accompanying drawings, in which like signs denote like elements, and wherein:

- FIG.1 is a flowchart representing an embodiment of a novel method for determining 3D occupancy prediction of a scene,
- FIG.2 is a flowchart representing steps of an embodiment of a novel method implementing the feature extraction according to the present disclosure,
- FIG 3 is a flowchart illustrating a novel cross-task attention method according to an embodiment of the present disclosure,
- FIG.4 is a system implementing the novel methods disclosed in the present disclosure,
- FIG.5 is a flowchart of a novel training method according to an embodiment of the present disclosure,
- FIG.6 is a system for implementing the novel training method according to an embodiment of the present disclosure,
- FIG 7 illustrates a flowchart of a method for generating an autonomous driving system using the above method for determining 3D occupancy predictions of a scene.

## DETAILED DESCRIPTION OF EMBODIMENTS

In the description below, we disclose a framework comprising at least three separate modules which each of them can help improve single-view, self-supervised 3D occupancy prediction by distilling information from relevant 2D pretraining and multi-task interactions. Some of the performances of each of these methods are illustrated by the tables given at the end of this specification and illustrate, especially table 5, that each of these methods taken independently, can help in improving the 3D reconstruction.

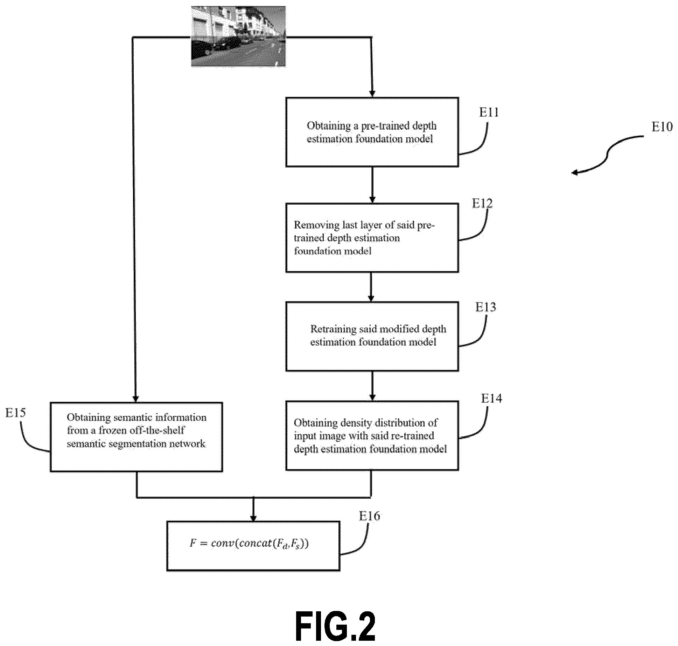

A first disclosure proposes an effective feature fusion technique for single-view 3D occupancy prediction that can leverage pretraining from relevant 2D tasks. This is illustrated by figure 2

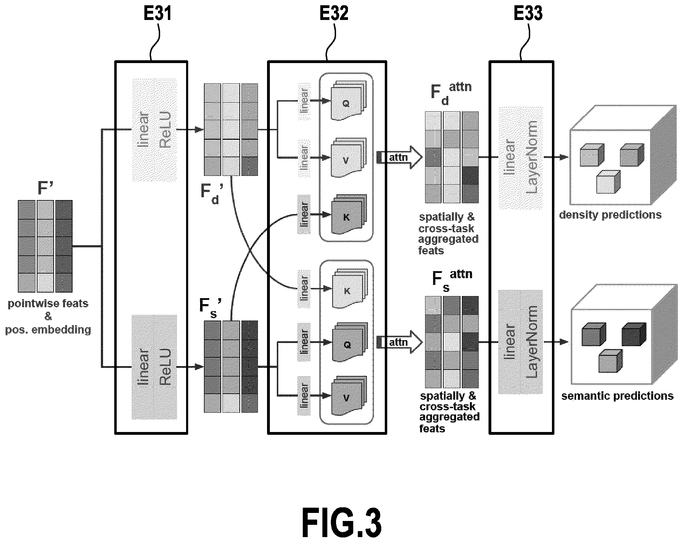

A second disclosure proposes a spatial cross-task attention mechanism in the decoding phase that can enhance interaction between geometry and semantics. This is illustrated by figure 3.

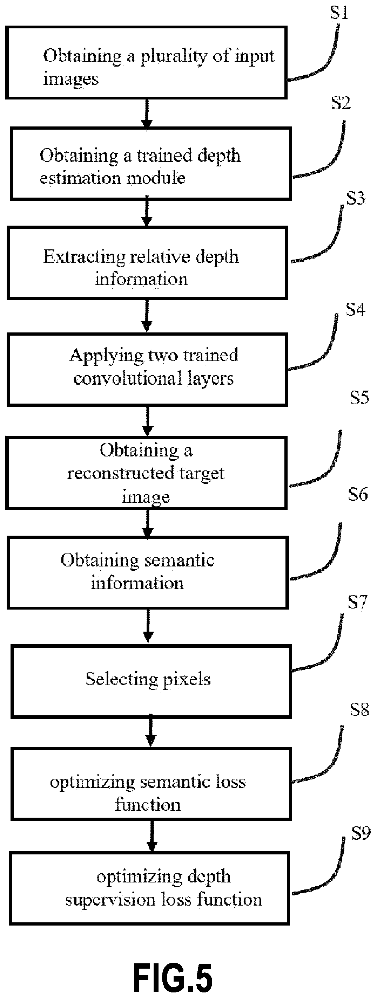

A third disclosure concerns a novel label refinement strategy, that can use relative depth estimation as a proxy to guide 3D occupancy training and refine noisy pseudo-labels. This is illustrated by the training method of figure 5.

SSCBench-KITTI-360 and SSCBench-nuScenes benchmarks can be used as input dataset to demonstrate the effectiveness of the proposed disclosures.

Experiments results are shown at the end of the present specification, showing the improvements of the novel methods as disclosed, in combination or separately.

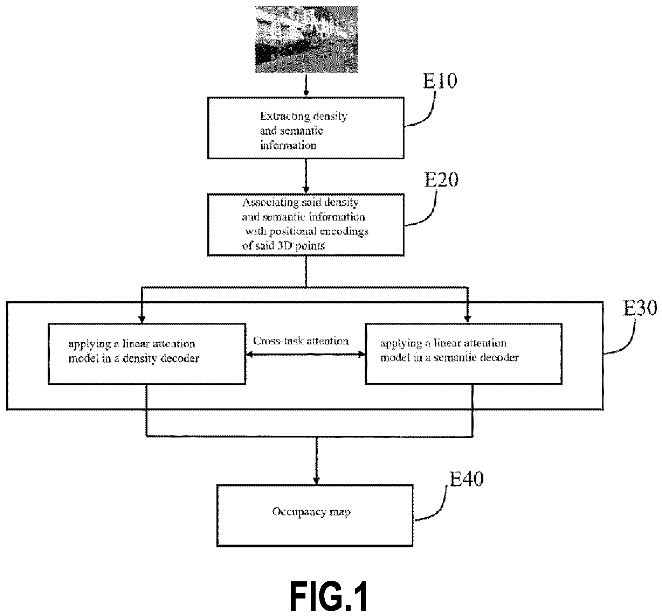

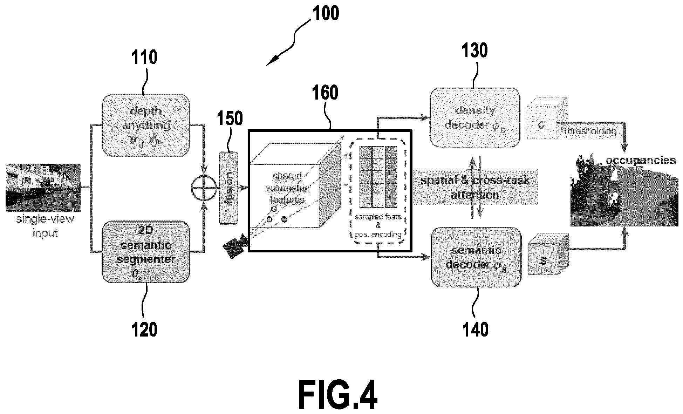

With reference to Figure 1 and figure 4 we will now describe the main steps of a method (respectively a system on

figure 4) for determining 3D occupancy predictions of a scene to the present disclosure and implementing the three separate novel disclosures as described above. The present method is based on an attention model.

In some embodiments, the method can be trained according to the method disclosed in reference to the training method of figure 5, however, this is not essential to the present method for determining 3D occupancy predictions of a scene, but an improvement. This can also be illustrated by the results illustrated in table 5.

Therefore in accordance with figure 1, the present disclosure, concerns a method for determining 3D occupancy predictions of a scene using a trained 3D occupancy prediction network, said method comprising:

- Extracting (E10) density and semantic information for 3D points of said single-view input image,
- Associating (E20) said density and semantic information with positional encodings of said 3D points,
- Obtaining (E30), spatially and cross density semantic aggregated features for each sample point, by

  o applying a density decoder of a linear trained attention model, for obtaining an intermediate density prediction, by using the semantic information of said sample point, and the density information of said sample point and of neighboring points of said sample point,

  o applying a semantic decoder of said linear trained attention model, for obtaining an intermediate semantic prediction, by using the density information of said sample point, and the semantic information of said sample point and of neighboring points of said sample point,

- inputting said obtained intermediate density prediction to the at least one output layer of said density decoder to obtain said density prediction for said sample point,
- inputting said obtained intermediate semantic prediction to the at least one output layer of said semantic decoder to obtain said semantic prediction for said sample point.

This will be illustrated by the following description.

In some embodiments, the present disclosure can reconstruct a full-3D scene from a single-view input image through a generalizable NeRF (Neural Radiance Field) based encoder -decoder network. A NeRF is a deep learning technique used to represent 3D scenes and reconstruct photorealistic images from a limited set of 2D images. The network predicts the color and density at each point along a ray.

NeRF can use a neural network to model a 3D scene by learning a mathematical function that can map:

3D spatial coordinates (x,y,z)
Viewing direction: a vector describing the camera's orientation
Color and light density: what is observed at those coordinates and directions
The neural network learns a function:

$$F_\theta(x, y, z, d) \to (r, g, b, \sigma)$$

where:

*r, g, b* represent the color (red, green, blue)
$\sigma$ represents the volumetric density, indicating how much light is absorbed or scattered at a given point.

The present disclosure can find an application in several domains such as:

- 3D Reconstruction: Reconstruct 3D scenes from 2D images (e.g., digital archaeology, object modeling).
- Novel View Synthesis: Generate photorealistic renders of a scene from viewpoints not present in the original dataset.
- Visual Effects for Movies: Create realistic virtual environments or backgrounds for film production.
- Augmented Reality & Virtual Reality (AR/VR): Generate immersive 3D scenes for interactive applications.
- Video Games: Provide highly detailed 3D environments with low memory and computational costs.

In a step E10, given a single RGB image $I_0 \in \mathbb{R}^{3\times H\times W}$, the corresponding camera intrinsics $K_0 \in \mathbb{R}^{3\times 4}$, and extrinsics $T_0 \in \mathbb{R}^{4\times 4}$, the network encodes the full 3D scene into a dense pixel-aligned implicit and continuous feature field $F \in \mathbb{R}^{C\times H\times W}$, representing the density and semantic distributions on the rays cast from the optical centre through the pixels. With a 3D point $x \in \mathbb{R}^3$ in the world coordinate, the density-semantic field F can be queried with the

point's projected location $u = \pi_0(x)$ on the 2D pixel plane given by the projection operation $\pi_0(x) = K_0T_0x$.

In some embodiments, step E10 can be implemented using off-the-shelf frozen foundation model for depth estimation such as Depthanythingv2 and a 2D frozen off-the-shelf semantic segmentation network. In other embodiments, DINOv2 reference [39] can be used as off-the-shelf semantic segmentation network.

The present disclosure proposes an improvement to known off-the-shelves depth estimation modules.

To this end, figure 2 illustrates an embodiment of a novel method implementing the feature extraction step E10 proposing an effective feature fusion technique for single-view 3D occupancy prediction that can leverage pretraining from relevant 2D tasks. As can be seen from table 5 later on in the present disclosure, this method itself can be a novel technique for improving the extraction of features which is a crucial task for effective learning and especially in 3D occupancy prediction.

At the feature extraction stage, the occupancy network can convert single-view RGB inputs into pixel-aligned volumetric features, encoding scene density and semantics within the camera frustum. Prior methods achieve this by training standard architectures (e.g., ResNet, UNets) from scratch. However, this approach is less effective for complex tasks like 3D occupancy prediction, where targeted features are crucial and extensive data is often needed for effective learning. In NeRF based frameworks, extracted features describe density and semantic distributions along rays from the camera centre through each pixel. Relevant dense 2D perception tasks such as depth estimation and semantic segmentation can assist the learning of this feature.

To this end, at step E11, the present disclosure obtains a pre-trained foundation model and utilizes the pretrained weights $\theta_d$ from the powerful foundation model for depth estimation, for instance DepthAnythingv2 which can be trained on large-scale synthetic data, as the initialization of the feature extractor.

According to a second step E12, the last layer feature map produced by the pre-trained foundation model producing $\theta_d$ can be retrieved by removing the last convolutional layer which produces the final output depth values, yielding $\theta'_d$ . As density distribution along a ray is relevant but not equivalent to the features produced by depth estimation which encode only partial geometry, the weights in $\theta'_d$ . are updated during a new training of the foundation model without the last layer, step E13. Therefore, at step E14, given an input image $I_0$, the feature representation of density distribution $F_d$ can be given by

$$F_d = f(I_0, \theta'_d) \qquad \text{Eq.1}$$

As shown above, the present disclosure therefore proposes a method for extracting density information for 3D points of a single-view input image wherein said method is trained using a training method comprising:

- Obtaining (E11) pre-trained parameters (weights) $\theta_d$ of a foundation model trained for depth-estimation of an image,
- Removing (E12) the last convolution layer of said trained foundation model,
- Re-training (E13) of said foundation model without said last convolution layer to obtain new parameters $\theta'_d$,

Said density information being obtained using said re-trained foundation model.

Steps E11 to E14 can be implemented using the density encoder 110 of figure 4.

Furthermore, the density feature representation $F_d$ can be augmented with semantic information by the predictions from a frozen off-the-shelf semantic segmentation network parameters $\theta_s$. At step E15, a one-hot encoded final semantic $F_s$ feature representation can be output from the segmentation network, so that this operation is not restricted to any specific network architecture:

$$F_s = f(I_0, \theta_s)^{onehot} \qquad \text{Eq.2}$$

Step E15 can be implemented using a 2D semantic segmenter 120 of figure 4.

At step E16, in addition, $F_d$ and $F_s$ can be concatenated and a convolutional layer can be applied to fuse them, thus producing feature representation F which contains rich information of both geometry and semantics:

$$F = conv(concat(F_d, F_s)) \qquad \text{Eq.3}$$

Therefore, according to some embodiments, the method comprises

- Obtaining (E15) semantic information of said input image by applying a trained semantic segmentation encoder to said input image,
- Applying a convolutional layer (E16) to a concatenation of said obtained semantic information and said obtained density information to obtain a fused density-semantic information of said input image.

Step E16 can be implemented using a fusion module 150 as illustrated on figure 4.

Back to figure 1, the fused feature F describes a density-semantic field of the scene and can then go through the decoding process to predict density and semantic values of 3D points.

According to some embodiments, the method comprises a step E20 of concatenating sampled obtained fused density-semantic information *F* with positional encodings of said 3D points to obtain sampled and positionally embedded features *F'*.This can be implemented by module 160 of figure 4.

In a step E30 a novel method for obtaining spatially and cross density-semantic aggregated features for each sample point is disclosed. This method proposes to aggregate features from neighbouring points to improve geometry learning and proposes a cross-task attention module that enables interaction between geometry and semantic information obtained from the semantic encoder (segmenter) and the density encoder.

This method is illustrated by the flowchart of figure 3 given as an example embodiment.

Steps E31, E32 and E33 can be implemented by a density decoder (upper part) and a semantic decoder (lower part) of the attention model, such as the density decoder 130 and the semantic decoder 140 of figure 4.

In a step E31, a linear ReLU layer can be applied to the sampled and positionally embedded features *F',* both for the semantic information and for the density information. A linear ReLU, sometimes written as leaky ReLU (Linear ReLU or ReLU with a nonzero slope in the negative regions), is a variant of the ReLU (Rectified Linear Unit) activation function. It is used in neural networks to introduce non-linear activation while maintaining a smoother behavior in the negative regions.

Given *F',* $F'_d$ and $F'_s$ respectively for the density and semantic features, are obtained by applying the fully connected layer of the linear ReLU and the ReLU activation.

On figure 3, $F'_d$ is represented as a matrix illustrating the density information for three neighbour points and $F'_s$ is also represented as a matrix illustrating the semantic information for the same three neighbour points. Each column of the density and semantic matrix comprising respectively the density and the semantic information for one 3D point x.

A linear attention step E32 is applied to the density and semantic vectors $F'_d$ and $F'_s$ to obtain spatially and cross density semantic aggregated features for each sample point.

In a linear attention model, such as a transformer based linear attention model, three main matrices are used:

- Q (Queries) - A representation of the input data that allows asking "questions."
- K (Keys) - Another representation of the input data used to match the "questions" to "answers."
- V (Values) - The actual data that the model will combine based on attention scores.

K, Q and V are matrices. Each row in the matrix correspond to one point. The columns are the number of dimensions of the feature vector representing that point. So, K, Q and V contain information about all points.

In the proposed disclosure, cross density-semantic information is used to enhance interaction between geometry and semantics. There are two sets of matrices, one for depth and one for semantics. To get cross-attention, rather than self-attention, the K matrices between semantics and density are swapped or the V matrices.

To this end, step E32 comprises obtaining spatially and cross density semantic aggregated features for each sample point, by

- applying a density decoder of a linear trained attention model, for obtaining an intermediate density prediction, by using the semantic information of said sample point, and the density information of said sample point and of neighboring points of said sample point,
- applying a semantic decoder of said linear trained attention model, for obtaining an intermediate semantic prediction, by, using the density information of said sample point, and the semantic information of said sample point and of neighboring points of said sample point,

In the embodiment of figure 3, for one sample point, the present disclosure takes :

- for the intermediate density prediction

    i. For Q and V, the density feature of the sample point and of neighboring sample points,
    ii. For K, the semantic feature of the sample point.

- For the intermediate semantic prediction

i. For Q and V, the semantic feature of the sample point and of neighboring sample points,
ii. For K, the density feature of the sample point.

In other embodiments, the following combination could also be used

- For the intermediate density prediction

i. For Q and K, the density feature of the sample point and of neighboring sample points,
ii. For V, the semantic feature of the sample point.

- For the intermediate semantic prediction

iii. For Q and K, the semantic feature of the sample point and of neighboring sample points,
iv. For V, the density feature of the sample point.

The density attention feature $F_d^{attn}$, also called intermediate density prediction, and the semantic attention feature $F_s^{attn}$, also called intermediate semantic prediction, can be obtained at step E32 using the following formula:

For the density:

$$G_d = \mathrm{softmax}\left(K_s/\sqrt{D}\right)^{\top} \cdot V_d \qquad \text{Eq.4}$$

$$F_d^{attn} = softmax(Q_d/\sqrt{D}).G_d \qquad \text{Eq.5}$$

For the semantics:

$$G_s = \mathrm{softmax}\left(K_d/\sqrt{D}\right)^{\top} \cdot V_s \qquad \text{Eq.6}$$

$$F_s^{attn} = softmax(Q_s/\sqrt{D}).G_s \qquad \text{Eq.7}$$

D being a scaling factor. In some embodiments, it can be equal to 512.

At step E33, the spatially and cross-aggregated density attention features $F_d^{attn}$ and semantic attention feature $F_s^{attn}$ can then respectively fed into the last layer of the attention model respectively for the density and semantic prediction.

Back to figure 1, step E30 is followed by step E40 where the occupancy map is obtained.

As output of step E33, more specifically produced by the semantic decoder 140, a semantic classification map is obtained where each voxel or point is assigned an object class (road, car, bike...). This map contains class probabilities for each voxel in the 3D space. An occupancy probability for each voxel is also obtained at step E30, more specifically produced by the density decoder 130. This occupancy probability indicates whether a voxel or point contains matter ( e.g an object surface) or is empty. The 3D occupancy map comprises therefore discrete representation of the 3D space where each vowel has:

- An occupancy score (indicating the presence or absence of an object/matter).
- An associated semantic class (if applicable).

A threshold can be applied to the density decoder output to determine whether a voxel is occupied or empty. For

instance, a threshold $\tau = 0.1$, can be applied.

For each occupied voxel, the most probable class is selected from the semantic map. If multiple classes are possible, the one with the highest probability is chosen.

Filters (e.g., CRF, MRF, dilation/erosion) to refine segmentation and temporal consistency, if applicable, such as fusing predictions from previous frames to improve robustness, can be applied. The resulting map contains:

- Occupied and empty voxels.

- Semantic classification associated with occupied voxels.

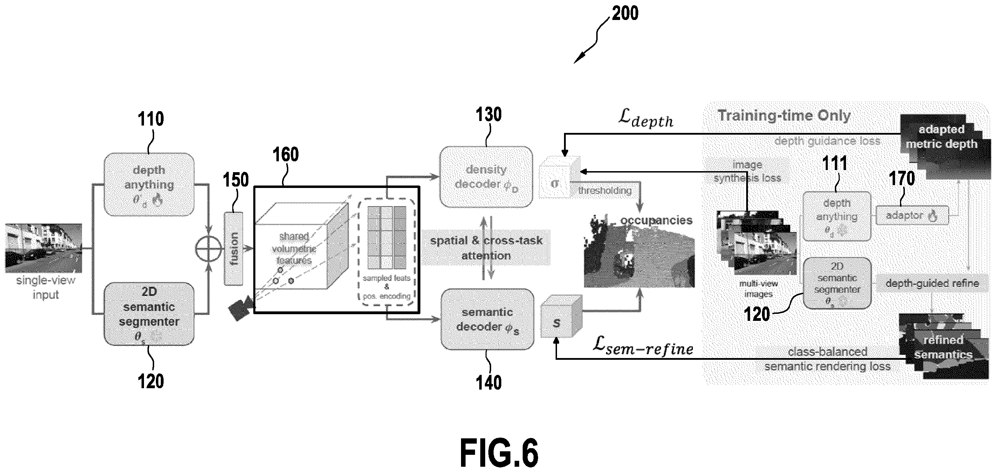

Figure 4 represents a system implementing the methods as disclosed in figures 1, 2 and 3 and therefore is not described more in details separately. System 100 comprises at least a depth encoder 110. As illustrated earlier, the depth encoder 110 can be trained using the method of figure 2. System 100 also comprises a trained 2D semantic segmenter 120. System 100 also comprises a fusion module 150, implementing step E16. System 100 also comprises a module 160 for implementing step E20 of figure 1. System 100 further comprises a trained density decoder 130 and a trained semantic decoder 140. Both of these two decoders can be trained using the system of figure 6.

We are now going to describe a novel method for training the 3D occupancy prediction network or method as described earlier in reference to the method of figure 1 and the system of figure 4. This method is illustrated on figure 5 and a system implementing this method is illustrated on figure 6. System 200 of figure 6 represents an improvement of a system 100 of figure 4 used for training the system of figure 4.

The self-supervised 3D occupancy prediction network is trained with only 2D supervisory signals. Self-supervision can be achieved by supervising the rendered RGB images and predicted semantic information with only 2D labels.

To render to a viewpoint from the semantic-density field, rays can be cast from the camera through every pixel, and the rendered colour/semantic value of a pixel can be represented as the integral of the colour/semantic values of the 3D points x along the corresponding ray over the points' probabilities T for being not occluded. In practice, the integral is approximated by the weighted sum of points {xi|i ∈ {0, ...,m} } at m discrete steps along the ray.

Specifically, for the step i, the probability Ti of xi being not occluded can be given by:

$$\alpha_i = exp(1 - \sigma_{x_i}\delta_i),\ T_i = \prod_{j=1}^{i-1}(1 - \alpha_j) \qquad \text{Eq.8}$$

Where $\delta_i$ denotes the distance between adjacent sampled points $x_i$ and $x_{i+1}$ and $\sigma_{x_i}$ the density prediction at $x_i$.

To render the color values $\hat{c}$, according to some embodiments, the proposed method aggregates all color values along the ray which are sampled from images $I_k$ of other views $k$ by projecting the 3D points x along the ray to the views, yielding:

$$c_{x,k} = I_k(\pi_k(x)).$$

Thus rendered color of the pixel (w;r;t the source view view *k*) can be given by:

$$\hat{c}_k = \sum_{i=1}^{m} T_i\, \alpha_i c_{x_i,k} \qquad \text{Eq.9}$$

Similarly, according to some embodiments, the semantic class s of the pixel is rendered by aggregating all predicted semantic logits s of the 3D points along the ray:

$$\hat{s} = argmax \sum_{i=1}^{m} T_i\, \alpha_i . softmax(s_{x_i}) \qquad \text{Eq.10}$$

Additionally, the depth value of the pixel can be rendered by retrieving the expected ray termination depth $\hat{d}$:

$$\hat{d} = \sum_{i=1}^{m} T_i\, \alpha_i . d_i \qquad \text{Eq.11}$$

As will be shown in the following description of the training method, the network training can then be supervised by calculating the losses between the rendered colour, semantics and depth and the corresponding (pseudo) groundtruth 2D labels. At training stage, the present disclosure models multi-task interactions, proposes strategies for view consistent pseudo-label refinement and enables more robust training.

During training, in step S1 in addition to a source image $I_0$ from which the 3D occupancy prediction network produces the feature map F, frames $I_k$ are aggregated from the main camera, stereo and side-view cameras over multiple time steps of a video sequence to formulate a multi-view setting.

Existing works such as reference [17] consider:

- A photometric discrepancy loss $\mathcal{L}_{ph}$ between randomly sampled image patches Pi from $I_0$ and reconstructed image patches $\hat{P}_{i,k}$ (whose colours are rendered with images $I_k$ using Eq. 9). Given an image, the model produces a per-pixel feature map. Each pixel in the feature map represents a ray that can be decoded into semantic class, depth and color of the point where the ray ends. So, at this point we have a set of 3D points with color and semantic class for each. If those points are projected to a different camera, the color and semantic class should match. If they don't, the loss is high and the model parameters are optimized.

$$\mathcal{L}_{ph} = min_{k \in N_{render}}(L1(P_i, \hat{P}_{i,k}) + \lambda SSIM(P_i, \hat{P}_{i,k})) \quad \text{Eq.12}$$

- and a regularisation loss, $\mathcal{L}_{eas}$ , dubbed as edge-aware smoothness loss, applied on inverse, mean-normalised reconstructed depth $d_i^*$ proposed by reference [16], with

$$d_i^* = \hat{d}_i / \bar{\hat{d}}_i \; with \; \hat{d}_i \text{ from Eq.11}$$

$$\mathcal{L}_{eas} = |\partial_x d_i^*| e^{-|\partial_x P_i|} + |\partial_y d_i^*| e^{-|\partial_y P_i|} \quad \text{Eq.13}$$

For the semantics, a binary-cross entropy (BCE) loss $\mathcal{L}_{sem}$ between the sampled patches from 2D pseudo semantic labels $S_i$ predicted from off-the-shelf semantic prediction networks and reconstructed semantic patches $\hat{S}_i$ is accounted:

$$\mathcal{L}_{sem} = BCE(S_i, \hat{S}_i) \quad \text{Eq.14}$$

However, direct predictions $S_i$ from off-the-shelf semantic prediction networks can contain a lot of noise. With Multiview images available during training, the proposed novel training method refines the semantic pseudo labels Si on the fly through multiview consistency constraint with the help of depth estimation.

A trained depth estimation model is selected, step S2, such as DepthAnythingV2 disclosed for instance in reference [62]. This is implemented by module 111 of figure 6. Module 111 can differ from module 110 of figure 4 in the sense that in figure 4, module 110 is re-trained to obtain $\theta_d'$ whereas it is frozen in figure 6, it means that its trained parameters are frozen. It can however have been trained like module 110 of figure 4.

In a step S3, a relative depth estimation for at least one target image is obtained with said trained depth estimation module 111.

In some embodiments, at least two target images are considered. In other words, for each source image a plurality of target images are considered.

$I_{source}$ *and* $I_{target}$ are images which are captured at the same time from a same scene by different cameras.

Specifically, given relative depth estimation provided with the trained depth estimation model on a target image $I_{target}$, in a step S4, an absolute depth $D_{target}$ is obtained from the relative depth estimation. In other words, this step consists in regressing an absolute depth.

This enables to create depth "pseudo-ground-truth" to use it to train the main model, in a similar way as in the first

loss $\mathcal{L}_{ph}$ above. Second, it helps to be able accurately project semantic labels from one view to another. To train the adapter providing the absolute depth, the RGB values of an image are projected to the depth predicted after the adapter, and then those 3D points are projected to another image. Over time this loss will train the adapter and the result will be an accurate absolute depth.

In some embodiments, at least two small convolutional layers are applied as an adaptor 170 on top to lift the relative depth estimation to absolute scale depth $D_{target}$. Therefore, in this embodiment, it is done by regressing highly accurate relative depth, and adapting it to produce absolute depth. By using at least two small convolutional layers, the relative depth can be projected to a high dimension with one first layer and back-projected to the absolute depth value using at least a final layer. Additional intermediate layers can also be used. By at least two small convolutional layers, it is meant that the number of parameters in this adaptor can be small.

These at least two layers adapters can be trained in a selfsupervised way with the photometric re-projection loss proposed in reference [16] between $I_{target}$, and its reconstruction $\hat{I}_{target}$

In some embodiments, instead of using two small convolutional layers as an adapter, the absolute depth cab be obtained by using either a highly accurate absolute depth method, triangulation (or stereo) from multiple images.

In some embodiments, ground truth from a 3D sensor (like lidar) can be obtained, however this would not be as convenient as using just available 2D images.

The reconstructed target image $\hat{I}_{target}$ can be obtained, step S5, from a source image $I_{source}$, , where pixels $u$ on $I_{target}$ can be back-projected into 3D points x using $D_{target}$ together with the camera parameters of the camera which captures $I_{target}$, and then colours can be sampled from $I_{source}$ via projecting $x$ onto $I_{source}$, yielding:

$I_{target} = I_{source}(\pi_{source}(x))$, with $\pi_{source}$ being the projection operation.

$I_{source}$ is the current image in the training loop and eventually all the images in the training set can be $I_{source}$.

Depth information helps accurately project semantic labels from one view to another by enabling geometric transformations between different camera perspectives. The process typically involves:

Backprojection to 3D Space:

Given a depth map and intrinsic camera parameters, each pixel in an image can be backprojected into a 3D point in world coordinates.
The depth value provides the distance from the camera, allowing reconstruction of the 3D scene.

Transformation to a New View:
Using the relative pose (extrinsic parameters) between two views, the 3D points are transformed into the coordinate system of the target camera.
Reprojection to 2D:

The transformed 3D points are projected onto the image plane of the target view using the target camera's intrinsic parameters.
This results in the corresponding pixel locations in the new view.

Semantic Label Propagation:
Once the 3D points are reprojected, their associated semantic labels from the source view can be transferred to the corresponding pixels in the target view.

Then, in a step S6, the semantic information of a pixel u in the target image and in the reconstructed target image with a semantic segmenter is obtained. The semantic map of the source image $I_{source}$ is back-projected into the 3D space into 3D points using the learned absolute depth map $D_{target}$ together with the camera parameters and then the semantic information of a reconstructed target image can be sampled from $I_{source}$ via projecting $x$ onto $I_{source}$, yielding:

$$\hat{S}_{target} = S_{source}(\pi_{source}(x)) \qquad \text{Eq.15}$$

Therefore, as compared to the reconstruction of colours, a similar reconstruction operation for the semantic pseudo label $S_{target}$ from $S_{source}$ is performed to get the reconstruction $\hat{S}_{target}$ for a pixel $u$ on $I_{target}$.

Pseudo-label refers to a label that was automatically annotated. In some embodiments, a pseudo-label can be obtained using a model that has been trained to perform semantic segmentation of images. This is called pseudo-label in the sense that it is used as if it was ground truth (or labels annotated by a person).

In a step S7, pixels u' whose semantic pseudo-labels are consistent with their reconstruction from another view are selected as considered as reliable. Other pixels are filtered.

$$u' = [u | S_{target}(u) = \hat{S}_{target}(u)] \qquad \text{Eq.16}$$

Pixels that do not match are therefore discarded. One reason to do this is that semantic labels have been predicted by a different model, and may not be accurate as no one supervised if they are correct. Therefore there is a need to filter them. If semantic labels were perfect, this refinement step would not be used.

In a step S8, a new semantic loss $\mathcal{L}_{sem-refine}$ function is defined and optimized during the training of the 3D occupancy prediction network. A novel semantic guided class-balanced patch sampling to stabilise the training on class-imbalanced datasets is computed. Optimizing the new semantic loss function can consist in some embodiments in minimizing the semantic loss. To get a sampled patch $S_i$ from $S_{target}$, instead of random sampling adopted in previous state-of-the-art works which results in a lot more patches on big "stuff" classes and more frequently appearing classes, the same sampling probability on the all classes that exist in $S_{target}$, is enforced, yielding class balanced patches $[S'_0, \ldots, S'_i, \ldots]$. Thus Eq. 14 becomes

$$\mathcal{L}_{sem-refine} = BCE(S'_i(u'_i), \hat{S}'_i(u'_i)) \qquad \text{Eq.17}$$

In a step S9, together with step S8, a depth supervision loss function using the absolute depth map $D$ on the rendered depth map $\hat{D}$ (via Eq. 11) is defined and optimized during the training. Optimizing the depth supervision loss function can consist in some embodiments in minimizing the depth supervision loss.The scale-invariant SILog loss proposed by reference [12] can be used. Let n be the number of pixels in $D$ and $y_i$, $\hat{y}_i$ the depth value of a pixel respectively in $D$, $\hat{D}$

$$\mathcal{L}_{depth} = \frac{1}{n}\sum_i d_i^2 - \frac{1}{n^2}\left(\sum_i d_i\right)^2, d_i = \log \hat{y}_i - \log y_i \qquad \text{Eq.18}$$

The final loss function optimized during the training of the 3D occupancy prediction network can therefore be:

$$\mathcal{L} = \mathcal{L}_{ph} + \lambda_c \mathcal{L}_{eas} + \lambda_s \mathcal{L}_{sem-refine} + \lambda_d \mathcal{L}_{depth} \qquad \text{Eq.19}$$

$\lambda_c$, $\lambda_s$, $\lambda_d$ weight the importance of each term of equation 19. In some embodiments, where all terms could be of the same importance, they can all be equal to 1.

Experiments

The proposed disclosure can take as input known dataset SSCBench-KITTI-360 which contains a subset of the KITTI-360 dataset (roughly 80% of the data), which contains video sequences recorded by multiple cameras mounted on a moving vehicle.

There are a pair of forward-facing stereo cameras and two fisheye cameras facing sideways left and right allowing multi-view training setup. During training, 2 frames from each view within a timeframe of 4s, resulting in 8 views for each sample, are followed and sampled. For evaluation, SSCBench-KITTI-360 provides semantic-occupancy ground-truth generated by aggregation of annotated Lidar points of multiple frames. The full SSCBench-KITTI-360 contains 9 long sequences, with 7 sequences containing ~42k multi-view frames for training, 1 sequence (~15k frames) for validation and 1 sequence (~13k frames) for testing. The groundtruth is provided every 5 frames, in total 2566 frames for testing. Additionally, the method is evaluated on SSCBench-nuScenes dataset. Derived from the nuScenes dataset, SSCBench-nuScenes provides similar 3D occupancy ground-truth to that in SSCBench-KITTI-360, which is aligned to single-view (front facing) sequences. The original nuScenes dataset provides synchronized video sequences from six surround-view cameras, which can be aligned with SSCBench-nuScenes frames to enable multi-view training. Similar multi-view samples are created with 4 frames from the front camera, 2 frames from front/back rights and 2 from front/back left

cameras (front/back is chosen randomly within each sample). The whole dataset consists 850 scenes in 20-second sequences, in which 500 scenes (~20k frames) are allocated for training, 200 scenes (~8k frames) for validation and 150 scenes (~6k frames) for testing. Groundtruth voxels are provided for all the frames in SSCBench-nuScenes.

Standard setup such as the ones given for instance in reference [5, 17, 19, 29, 30, 45, 51, are used to evaluate scenes of size 51.2m x~51.2m x~6.4m at a 0.2m voxel resolution. Using the threshold $\tau = 0.1$ from reference [17] whose selection is based on validation set AuC, predicted densities are converted to binary occupancy. For metrics, IoU (intersection over union) is used against the 3D voxel groundtruth to assess geometric reconstruction quality and mIoU (mean intersection over union) together with per-class IoUs for semantic reconstruction quality. To evaluate visible and invisible areas from the camera's perspective, visibility masks are computed with 3D-DDA ray tracing reference [42] and IoU, mIoU, and per-class IoUs for each region are reported. In addition, mIoU and per-class IoU for rendered 2D semantic maps against 2D groundtruth provided for the front views in SSCBench-KITTI-360 are reported, to access the front view rendering quality.

The method is implemented with Pytorch and trained on two Tesla A40 GPUs. For pseudo semantic label generation and semantic fusion, the previous work of reference [17] is used as well as ResNet101, reference [18] version of Panoptic-Deeplab, reference [7] trained on Cityscapes, reference [10] as semantic segmenter $\theta s$, with frozen parameters. ViT-B reference [11] version of DepthAnythingv2, reference [62] is used as the geometry branch $\theta' d$ in the feature extractor and depth estimator $\theta d$. The models are trained using Adam reference [22] optimizer for both datasets, with a learning rate of $10^{-4}$ for the decoders and $10^{-6}$ for $\theta' d$ , to preserve information from pretraining. 60 epochs are trained on the SSCBench-KITTI-360 dataset and the learning rates are reduced 10x after 120k iterations, following reference [17]. For SSCBench-nuScenes, initialization is performed with the SSCBench-KITTI-360 trained models and trained for 10 epochs, then the learning rates are reduced 10x after 10k iterations. All the other hyper parameters are set following reference [17].

## 3D Occupancy Prediction Results

Tables 1: 3D occupancy prediction results on SSCBench-KITTI-360.

| | Method | IoU (%) | mIoU (%) | car | bicycle | motorcycle | truck | other-veh. | person | |
|---|---|---|---|---|---|---|---|---|---|---|
| gt-sup | MonoScene reference [5] | 37,87 | 13,52 | 19,34 | 0,43 | 0,58 | 8,02 | 2,03 | 0,86 | |
| | Voxformer reference [30] | 38,76 | 13,2 | 17,84 | 1,16 | 0,89 | 4,56 | 2,06 | 1,63 | |
| | TPVFormer reference [19] | 40,22 | 14,95 | 21,56 | 1,09 | **1,37** | 8,06 | 2,57 | 2,28 | |
| | OccFormer reference [68] | **40,27** | **14,97** | **22,58** | 0,66 | 0,26 | **9,89** | **3,82** | 2,77 | |
| 2d-sup | S4C reference [17] | 38,84 | 10,1 | 10,32 | 0 | 0 | 2,17 | 0,15 | **0,36** | |
| | invention | **40,44** | **11,7** | **12,75** | **2,48** | **4,17** | **6,9** | **2,74** | 0,34 | |

(continued)

| | Method | road | sidewalk | building | fence | vegetation | terrain | pole | traf.-si-gn | other-obj. |
|---|---|---|---|---|---|---|---|---|---|---|
| gt-sup | MonoScene reference [5] | 48,4 | 28,13 | 32,89 | 3,53 | 26,15 | 16,75 | 6,92 | 5,67 | 3,09 |
| | Voxformer reference [30] | 47 | 27,21 | 31,18 | 4,97 | 28,99 | 14,69 | 6,51 | 6,92 | 2,43 |
| | TPVFormer reference [19] | 53 | 31,07 | 35,3 | 4,8 | 30,08 | 17,51 | 7,46 | 5,86 | 2,7 |
| | OccFormer reference [68] | **54,3** | **31,53** | **36,42** | 4,8 | **31** | **19,51** | **7,77** | **8,51** | **4,6** |
| 2d-sup | S4C refer-ence [17] | 48,6 | 26,43 | 20,96 | 2,8 | 22,32 | 16,45 | 0,43 | **0,49** | 0 |
| | invention | **52,3** | **30,66** | **22,84** | **3,57** | **23,15** | **16,53** | **0,49** | 0,34 | **0,08** |

Tables 1 show the performance of the 3D occupancy prediction results on SSCBench-KITTI-360 input dataset. Tables 1 show that the present disclosure achieves state-of-art performance against existing self-supervised single-view method, and even surpassing supervised methods on some rare "thing" classes. (%) indicates each class label ratio. Best numbers are in bold.

Tables 2: 3D occupancy prediction results on SSCBench-nuScenes

| | Method | IoU (%) | mIoU (%) | car | bicycle | motorcycle | truck | |
|---|---|---|---|---|---|---|---|---|
| gt-sup | MonoScene reference [5] | **29,63** | 9,34 | 10,17 | 1,7 | 3,8 | 8,35 | |
| | Voxformer re-ference [30] | 25,16 | 5,04 | 4,95 | 0,29 | 1,21 | 2,73 | |
| | OccFormer reference [68] | 28,23 | **11,24** | **14,61** | 2,25 | **7,97** | **11,88** | |
| 2d-sup | S4C refer-ence [17] - kt360 | 12,44 | 3,37 | 1,81 | 0 | 0 | 0 | |
| | invention - kt360 | 15,79 | 4,63 | 2,1 | 0,59 | 1,16 | 3,59 | |
| | S4C refer-ence [17] - ft | 18,24 | 5,07 | 6,99 | 0 | 0 | 0 | |
| | invention - ft | **24,5** | **6,76** | **7,44** | 1,72 | 2,54 | 4 | |
| | Method | other-veh. | person | road | sidewalk | building | vegetation | other-obj. |
| gt-sup | MonoScene reference [5] | 8,74 | 3,72 | 38,8 | 14,74 | 7,23 | 5,5 | 0,03 |
| | Voxformer re-ference [30] | 2,45 | 1,12 | 23,9 | 10,14 | 3,97 | 4,58 | 0,06 |
| | OccFormer reference [68] | **9,8** | 5,87 | **37,6** | **18,63** | **9,05** | 5,92 | 0 |

(continued)

| | Method | other-veh. | person | road | sidewalk | building | vegetation | other-obj. |
|---|---|---|---|---|---|---|---|---|
| 2d-sup | S4C reference [17] - kt360 | 0 | 0,73 | 23,4 | 4,99 | 2,49 | 3,7 | 0 |
| | invention - kt360 | 0 | 1,26 | 32,6 | 5,33 | 2,97 | 4,97 | 0,01 |
| | S4C reference [17] - ft | 0 | 1,8 | 26,1 | 10,03 | 5,09 | 5,81 | 0 |
| | invention - ft | 0 | 1,96 | **36,6** | **10,32** | 5,89 | **7,86** | 0,02 |

Tables 2 shows the performance of the 3D occupancy prediction results on SSCBench-nuScenes input dataset. In the results of tables 2, both S4C [17] and the present disclosed invention are initialized with SSCBench-KITTI-360 trained models, and both cross-dataset testing of SSCBench-KITTI-360 trained models (indicated with "-kt360") and results of fine-tuned models on SSCBench-nuScenes ("-ft") are reported. The present disclosure achieves state-of-art performance against the existing self-supervised single-view method by a large margin on both settings. (%) indicates each class label ratio. Best numbers are in bold.

Quantitative 3D occupancy prediction results of the proposed disclosure compared with state-of-the-art single-view methods on SSCBench-KITTI-360 are shown in Table 1 and SSCBench-nuScenes in Table 2. All the methods feature single-view RGB input, with references [5, 19, 30, 68] trained with groundtruth 3D supervision while reference [17] and the present disclosed method is trained with 2D supervision. The present method shows improved performance on both datasets, for both geometry reconstruction and semantic segmentation, especially on challenging small objects such as "motocyle", "bicycle", "person".

In addition, as SSCBench-nuScenes is much smaller and has more challenging multi-view training setup (the front camera has a much smaller Field of view and there is no front-view stereo pairs, thus the overlapping region that can be created with multi-view images is much smaller), both the competing method of reference [17] and the present disclosed method are initialized with corresponding models trained on SSCBench-KITTI-360 for faster convergence, and both cross-dataset KITTI-360 trained model performance and fine-tuned performance are reported in Tables 2. The present disclosed method improves the existing method by a large margin for both cross-dataset testing and fine-tuning, yielding better generalisability across domains. In addition, the scenes are divided into visible surface and invisible areas by applying ray tracing techniques according to reference [42] on the SSCBench-KITTI-360 3D occupancy groundtruth to generate visibility masks, and the 3D occupancy prediction performance is calculated respectively for visible and occluded parts, shown in Table 3. The method consistently improves on both visible and occluded areas in the scene, and yields even more improvements in the occluded areas of vehicle classes such as "car", "truck" and "other vehicles", indicating more accurate geometry reconstruction for safety critical classes.

The present disclosed method demonstrates more accurate scene geometry reconstruction especially on unseen areas where existing method usually suffer from "trailing artifacts" i.e. objects (such as cars) "drag" along the viewing direction of the camera rays on the self-occluded areas, thanks to the spatial cross-attention design, and performs better in capturing challenging small or rare objects.

| | Method | IoU (%) | mIoU (%) | car | bicycle | motorcycle | truck | other-veh. | person |
|---|---|---|---|---|---|---|---|---|---|
| visible | visible S4C reference [17] | 23,04 | 9,68 | 7,53 | 0 | 0 | 3,09 | 0,25 | 0,44 |
| | invention | **26,64** | **11,15** | **9,08** | **3,05** | **4,27** | **5,69** | **1,6** | 0,43 |
| occluded | occl. S4C reference [17] | 42,31 | 10,19 | 11,08 | 0 | 2,05 | 0,12 | 0,34 | **0,34** |
| | invention | **43,18** | **11,78** | **13,64** | **2,25** | **4,13** | **7,21** | **3,1** | 0,3 |

| | Method | road | sidewalk | building | fence | vegetation | terrain | pole | traf.-sign | other-obj. |
|---|---|---|---|---|---|---|---|---|---|---|
| visible | visible S4C reference [17] | 54,95 | 25,25 | 18,11 | 3,89 | 11,71 | **18,37** | 0,69 | **0,96** | 0 |
| | invention | **57,28** | **29,59** | **20,29** | **4,43** | **13,98** | 15,48 | **0,98** | 0,93 | **0,22** |
| occluded | occl. S4C reference [17] | 47,08 | **26,72** | 21,46 | 4,27 | 14,71 | 16,25 | 0,31 | **0,31** | 0 |
| | invention | **50,92** | 26,36 | **23,24** | **3,42** | **24,78** | **16,7** | **0,32** | 0,32 | **0,06** |

Tables 3: Visible and invisible area breakdown results on SSCBench-KITTI-360.

Table 3 shows that the present invention_improves on both visible surfaces and occluded areas. (%) indicates each class label ratio. Best numbers are in bold

## 2D Semantic Rendering Results

2D rendered semantics quality are further rendered against manually labelled ground-truth 2D semantic maps of front views provided by SSCBench-KITTI-360. In Tables 4, 2D semantics quality of the semantic pseudo labels used to train the network are reported, as well as rendered semantics quality of the methods. The present disclosed method outperforms the existing method by a large margin, yielding even close results to the pseudo groundtruth, especially on the challenging small classes such as "motorcycle", "bicycle", "person", etc. Note that due to sparse LiDAR aggregation, voxels of some small classes such as "person" can be ignored in 3D groundtruth, but it can be observed from 2D rendering results that the present method is greatly improving in capturing these classes.

Tables 4: Rendered 2D semantic segmentation results on SSCBench-KITTI-360.

| **Method** | **mIoU (%)** | **car (6.93%)** | **bicycle (0.97%)** | **motorcycle (0.49%)** | **truck (0.94%)** | **other-veh. (1.75%)** | **person (3.75%)** | **road (20.62%)** |
|---|---|---|---|---|---|---|---|---|
| PanopticDeepLab ref[7] | 46,55 | 86,49 | 21,57 | 35,09 | 36,95 | 10,94 | 28,38 | 83,55 |
| S4C ref[17] | 39,04 | 82,72 | 0 | 0 | 23,78 | 0,34 | 9,91 | **87,01** |
| invention | **46,5** | **84,87** | **21,58** | **35,17** | **36,8** | **11,2** | **26,6** | 86,42 |
| **Method** | **sidewalk (5.93%)** | **building (15.49%)** | **fence (2.96%)** | **vegetation (25.49%)** | **terrain (6.71%)** | **pole (2.05%)** | **traf.-sign (0.92%)** | **other-obj. (0.35%)** |
| PanopticDeepLab ref[7] | 57,55 | 83,47 | 44 | 85,02 | 55,22 | 32,75 | 37,13 | 0,18 |
| S4C ref[17] | 60,31 | **84,38** | 35,13 | **85,03** | **60,6** | 24,5 | 25,97 | 0 |
| invention | **62,42** | 83,97 | **44,21** | 84,98 | 56,77 | **29,47** | **32,84** | **0,19** |

The present invention outperforms the existing method by a large margin especially on challenging small classes, and yields even comparative results to the 2D pseudo labels both methods use to train (PanopticDeeplab reference [7]). (%) indicates each class label ratio. Best numbers are in bold.

The above results show that the present disclosure tackles the challenging problem of jointly reconstructing scene geometry and semantics from single-view and proposes a new approach for single-view 3D occupancy prediction with effective multi-task distillation. With the proposed components for multi-task feature fusion, spatial cross-task attention and view-consistent pseudo-label refinement (thanks to the novel training method), the present disclosure improves over existing method on both geometry reconstruction and semantic segmentation by a large margin, especially on capturing challenging small objects that rarely exist in the training set, and demonstrates more plausible geometry reconstruction together with semantics especially on self-occluded regions (termed as reduced "trailing effects"). Extensive experiments demonstrate the effectiveness of the proposed components, each of them bringing improvement to known methods and can be used independently. The present disclosure also shows improved cross-dataset generalizability, which can pave the way towards a ubiquitous 3D occupancy prediction framework learned from massive unlabeled 2D data.

Table 5

| **feature fusion** | | **semantic refine** | | | **attn** | **IoU** | **mIoU** |
|---|---|---|---|---|---|---|---|
| $\theta'_d$ | $\theta_s$ | $\mathcal{L}_{depth}$ | *S'* | u' | | | |
| S4C reference [17] | | | | | | 38,84 | 10,1 |
| dino_v2 reference [39] | | | | | | 38,2 | 9,77 |
| da_v2 reference [62] | | | | | | 39,99 | 10,66 |
| da_v2 reference [62] | ✓ | | | | | 39,89 | 10,73 |
| da_v2 reference [62] | | ✓ | | | | 39,89 | 10,79 |
| da_v2 reference [62] | | ✓ | ✓ | | | 40,12 | 10,93 |
| da_v2 reference [62] | | ✓ | ✓ | ✓ | | 40,55 | 11,7 |
| da_v2 reference [62] | | | | | ✓ | 40,5 | 11,3 |
| da_v2 reference [62] | | ✓ | ✓ | ✓ | ✓ | 40,45 | 11,1 |
| da_v2 reference [62] | ✓ | ✓ | ✓ | ✓ | ✓ | 40,44 | 11,7 |

Table 5 represents the ablation results on SSCBench-KITTI-360 dataset. Best numbers are in bold. $\theta'_d$ indicates the pretrained models adopted for the encoder as mentioned earlier. Here three models, S4C (reference [17]), DINOv2 (reference [39]) or depthanythingV2 (reference [62]) have been taken as the pre-trained depth encoder 110.

$\theta_s$ column indicates whether semantic predictions are fused with density prediction as mentioned earlier with reference to equation 3. $\mathcal{L}_{depth}$ column indicates that the depth supervision loss function is calculated and optimized during the training.

*S'* column indicates that the semantic loss $\mathcal{L}_{sem-refine}$ function is calculated and optimized during the training.

*u'* indicates that the pixels *u* are selected according to equation 16 to keep only the pixels *u'*.

"attn" column indicates that the spatial cross-task attention method according to steps E31 to E33disclosed in figure 3 is used.

Table 5 illustrates that each of the present disclosure plurality of inventions propose an improvement of state of the art3D occupancy prediction methods.

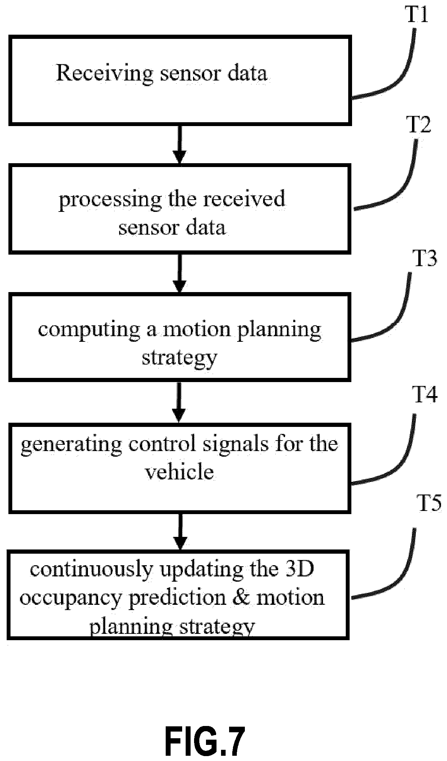

The present disclosure can find an application in an autonomous driving system. Figure 7 illustrates a flowchart of a method for generating an autonomous driving system using the above method for determining 3D occupancy predictions of a scene.

The method comprises a first step T1 of receiving sensor data from one or more sensors mounted on a vehicle. According to some embodiments, the sensor data comprise image data, LiDAR data, or radar data that can be embedded in the vehicle.

According to a second step T2, the method processes the received sensor data using a method for determining 3D occupancy predictions of a scene according as described earlier, to generate a three-dimensional representation of the surrounding environment, the representation including occupancy probabilities for spatial locations within a predefined detection range and semantic labels for occupied regions of the 3D space.

According to a third step T3, the method comprises computing a motion planning strategy based on the predicted 3D occupancy and associated semantic labels, wherein the strategy accounts for dynamic and static obstacles. Several known methods are known to compute motion planning strategy based on the predicted 3D occupancy and associated semantic labels.

According to a fourth step T4, the method comprises generating control signals for the vehicle based on the computed motion planning strategy to enable autonomous navigation while avoiding collisions.

According to a fifth step T5, the method comprises continuously updating the 3D occupancy prediction and motion planning strategy in real-time as new sensor data is received.

According to some embodiments, the objects of the scene to differentiate can be selected among road elements, vehicles, pedestrians, and other relevant objects of the scene

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

References

[5] Anh-Quan Cao and Raoul De Charette. Monoscene: Monocular 3d semantic scene completion. In Proceedings of the IEEE/CVF Conference on Computer Vision and Pattern Recognition, pages 3991-4001, 2022.

[7] Bowen Cheng, Maxwell D Collins, Yukun Zhu, Ting Liu, Thomas S Huang, Hartwig Adam, and Liang-Chieh Chen. Panoptic-deeplab: A simple, strong, and fast baseline for bottom-up panoptic segmentation. In Proceedings of the IEEE/CVF conference on computer vision and pattern recognition, pages 12475-12485, 2020.

[10] Marius Cordts, Mohamed Omran, Sebastian Ramos, Timo Rehfeld, Markus Enzweiler, Rodrigo Benenson, Uwe Franke, Stefan Roth, and Bernt Schiele. The cityscapes dataset for semantic urban scene understanding. In Proceedings of the IEEE conference on computer vision and pattern recognition, pages 3213-3223, 2016.

[11] Alexey Dosovitskiy, Lucas Beyer, Alexander Kolesnikov, Dirk Weissenborn, Xiaohua Zhai, Thomas Unterthiner, Mostafa Dehghani, Matthias Minderer, Georg Heigold, Sylvain Gelly, et al. An image is worth 16x16 words: Transformers for image recognition at scale. arXiv preprint arXiv:2010.11929, 2020.

[12] David Eigen, Christian Puhrsch, and Rob Fergus. Depth map prediction from a single image using a multi-scale deep network. Advances in neural information processing systems, 27, 2014.

[16] Cl'ement Godard, Oisin Mac Aodha, Michael Firman, and Gabriel J Brostow. Digging into self-supervised monocular depth estimation. In Proceedings of the IEEE/CVF international conference on computer vision, pages 3828-3838, 2019.

[17] Adrian Hayler, Felix Wimbauer, Dominik Muhle, Christian Rupprecht, and Daniel Cremers. S4c: Self-supervised semantic scene completion with neural fields. arXiv preprint arXiv:2310.07522, 2023.

[18] Kaiming He, Xiangyu Zhang, Shaoqing Ren, and Jian Sun. Deep residual learning for image recognition. In Proceedings of the IEEE conference on computer vision and pattern recognition, pages 770-778, 2016.

[19] Yuanhui Huang, Wenzhao Zheng, Yunpeng Zhang, Jie Zhou, and Jiwen Lu. Triperspective view for visionbased 3d semantic occupancy prediction. In Proceedings of the IEEE/CVF conference on computer vision and pattern recognition, pages 9223-9232, 2023.

[22] Diederik P Kingma. Adam: A method for stochastic optimization. arXiv preprint arXiv:1412.6980, 2014.

[29] Yiming Li, Sihang Li, Xinhao Liu, Moonjun Gong, Kenan Li, Nuo Chen, Zijun Wang, Zhiheng Li, Tao Jiang, Fisher Yu, et al. Sscbench: A large-scale 3d semantic scene completion benchmark for autonomous driving. arXiv preprint arXiv:2306.09001, 2023.

[30] Yiming Li, Zhiding Yu, Christopher Choy, Chaowei Xiao, JoseMAlvarez, Sanja Fidler, Chen Feng, and Anima Anandkumar. Voxformer: Sparse voxel transformer for camerabased 3d semantic scene completion. In Proceedings of the IEEE/CVF conference on computer vision and pattern recognition, pages 9087-9098, 2023.

[39] Maxime Oquab, Timoth'ee Darcet, Th'eo Moutakanni, Huy Vo, Marc Szafraniec, Vasil Khalidov, Pierre Fernandez, Daniel Haziza, Francisco Massa, Alaaeldin El-Nouby, et al. Dinov2: Learning robust visual features without supervision. arXiv preprint arXiv:2304.07193, 2023.

[42] Matt Pharr, Wenzel Jakob, and Greg Humphreys. Physically based rendering: From theory to implementation. MIT Press, 2023.

[51] Wenwen Tong, Chonghao Sima, Tai Wang, Li Chen, Silei Wu, Hanming Deng, Yi Gu, Lewei Lu, Ping Luo, Dahua Lin, et al. Scene as occupancy. In Proceedings of the IEEE/CVF International Conference on Computer Vision, pages 8406-8415, 2023.

[62] Lihe Yang, Bingyi Kang, Zilong Huang, Zhen Zhao, Xiaogang Xu, Jiashi Feng, and Hengshuang Zhao. Depth anything v2. arXiv preprint arXiv:2406.09414, 2024.

[68] Yunpeng Zhang, Zheng Zhu, and Dalong Du. Occformer: Dual-path transformer for vision-based 3d semantic occupancy prediction. In Proceedings of the IEEE/CVF International Conference on Computer Vision, pages 9433-9443, 2023.

## Claims

**1.** A method for training a 3D occupancy prediction network , said method comprising

a. Obtaining (S1) a plurality of input images ($I_k$) of a scene captured by a plurality of cameras,
b. Extracting (S3), with a trained depth estimation module, a relative depth information for 3D points of at least one target image ($I_{target}$) among said plurality of input images ($I_k$),
c. Obtaining (S4), from said relative depth information, an absolute depth information ($D_{target}$) of said at least one target image ($I_{target}$),
d. Obtaining (S5), from one source image ($I_{source}$) among said plurality of input images, a reconstructed target image for each of said at least one target image ($I_{target}$) using said absolute depth information ($D_{target}$),
e. Obtaining (S6), semantic information of pixels of said at least one target image ($I_{target}$) and semantic information of pixels of said at least one reconstructed target image ($\hat{I}_{target}$),
f. Selecting (S7) pixels (u') of said at least one target image whose semantic information is the same in said at least one target image ($I_{target}$) and in said at least one reconstructed target image ($\hat{I}_{target}$),
g. optimizing (S8) a semantic loss ( $\mathcal{L}_{sem-refine}$ ) function of the 3D occupancy prediction network as a binary cross entropy applied on patches ( $S_i'(u_i')$ ) and reconstructed patches ( $\hat{S}_i'(u_i')$ ) of said selected pixels
h. optimizing (S9) a depth supervision loss ( $\mathcal{L}_{depth}$ ) function by refining the absolute depth information ($D_{target}$) on a rendered depth map $(\widehat{D})$ .

**2.** The method of claim 1 wherein said patches are obtained using the same sampling probability on all the classes of said semantic information.

**3.** The method of any of claims 1 or 2 comprising computing a final loss equal to the weighted sum of said semantic loss, said depth supervision loss, a photometric discrepancy loss, and a regularization loss.

**4.** The method of any of claims 1 to 3 wherein obtaining, from said relative depth information, an absolute depth information ($D_{target}$) of said target image ($I_{target}$), is performed using two convolutional layers trained in a self-supervised way using a photometric re-projection loss between said target image and said reconstructed target image.

**5.** The method of claim 4 wherein obtaining said reconstructed target image comprises:

- projecting 2D pixels of said target image to 3D points using said absolute depth information, and parameters of a camera used for obtaining said target image,
- projecting said 3D points on said source image to associate with said 3D points, colors of said corresponding source image projected points, for obtaining said reconstructed target image.

**6.** A method for determining 3D occupancy predictions of a scene using a 3D occupancy prediction network trained according to any of claims 1 to 5 wherein said method comprises:

- Extracting (E10) density and semantic information for 3D points of said single-view input image,
- Associating (E20) said density and semantic information with positional encodings of said 3D points,
- Obtaining (E30), spatially and cross density semantic aggregated features for each sample point, by

  o applying a density decoder of a linear trained attention model, for obtaining an intermediate density prediction, by using the semantic information of said sample point, and the density information of said sample point and of neighboring points of said sample point,
  o applying a semantic decoder of said linear trained attention model, for obtaining an intermediate semantic prediction, by using the density information of said sample point, and the semantic information of said sample point and of neighboring points of said sample point,

- inputting said obtained intermediate density prediction to the at least one output layer of said density decoder to obtain said density prediction for said sample point,
- inputting said obtained intermediate semantic prediction to the at least one output layer of said semantic decoder to obtain said semantic prediction for said sample point.

**7.** The method of claim 6 wherein applying a linear attention model in a density decoder of said attention model, for obtaining an intermediate density prediction, comprises

• selecting either as keys (K) or values (V) of said linear attention model of the density decoder, the semantic information of said sample point, and
• taking for query (Q) of said attention model and for the non selected keys (K) or values (V) of said linear attention model of the density decoder, the density information of said sample point and of neighboring points of said sample points,

**8.** The method of any of claims 6 or 7 wherein applying a linear attention model in a semantic decoder of said attention model, for obtaining an intermediate semantic prediction, comprises

• selecting either as keys (K) or values (V) of said linear attention model of the semantic decoder, the density information of said sample point, and
• taking as query (Q) of said linear attention model and for the non selected keys (K) or values (V) of said linear attention model of the semantic decoder, the semantic information of said sample point and of neighboring points of said sample points,

**9.** The method of any of claims 6 to 8 wherein extracting density information for 3D points of said single-view input image is performed using a training method comprising:

- Obtaining (E11) pre-trained parameters (weights) $\theta_d$ of a foundation model trained for depth-estimation of an image,
- Removing (E12) the last convolution layer of said trained foundation model,
- Re-training (E13) of said foundation model without said last convolution layer to obtain new parameters $\theta'_d$,
- Obtaining (E14) said density information of said input image using said re-trained foundation model,

**10.** The method of claim 9 wherein extracting density and semantic information for 3D points of said single-view input image, comprises

- Obtaining (E15) said semantic information by applying a semantic segmentation encoder to said input image,
- Applying (E16) a convolutional layer to a concatenation of said obtained semantic information and said obtained density information to obtain a fused density-semantic information of said input image.

**11.** The method of any of claims 9 to 10 further comprising associating said obtained fused density-semantic information with positional encodings of said 3D points.

**12.** The method of any of claims 6 to 11 wherein said method is implemented using a neural Radiance fields network.

**13.** A method for generating an autonomous driving system comprising:

- receiving sensor data from one or more sensors mounted on a vehicle,
- processing the received sensor data using a method for determining 3D occupancy predictions of a scene according to any of claims 6 to 12, to generate a three-dimensional representation of the surrounding environment, the representation including occupancy probabilities for spatial locations within a predefined detection range and semantic labels for occupied regions of the 3D space to differentiate objects of the scene,
- computing a motion planning strategy based on the predicted 3D occupancy and associated semantic labels, wherein the strategy accounts for dynamic and static obstacles;
- generating control signals for the vehicle based on the computed motion planning strategy to enable autonomous navigation while avoiding collisions; and
- continuously updating the 3D occupancy prediction and motion planning strategy in real-time as new sensor data is received.

**14.** A computer program set including instructions for executing the steps of the methods of any one of claims 1 to 12 when said program set is executed by at least one computer.

**15.** A recording medium readable by at least one computer and having recorded thereon at least one computer program including instructions for executing the steps of the methods of any one of claims 1 to 12.

**Amended claims in accordance with Rule 137(2) EPC.**

**1.** A method for training a 3D occupancy prediction network, said method comprising

a. Obtaining (S1) a plurality of input images ($I_k$) of a scene captured by a plurality of cameras,
b. Extracting (S3), with a trained depth estimation module, a relative depth information for 3D points of at least one target image ($I_{target}$) among said plurality of input images ($I_k$),
c. Obtaining (S4), from said relative depth information, an absolute depth information ($D_{target}$) of said at least one target image ($I_{target}$),
d. Obtaining (S5), from one source image ($I_{source}$) among said plurality of input images, a reconstructed target image for each of said at least one target image ($I_{target}$) using said absolute depth information ($D_{target}$),
e. Obtaining (S6), semantic information of pixels of said at least one target image ($I_{target}$) and semantic information of pixels of said at least one reconstructed target image ($\hat{I}_{target}$),
f. Selecting (S7) pixels (u') of said at least one target image whose semantic information is the same in said at least one target image ($I_{target}$) and in said at least one reconstructed target image ($\hat{I}_{target}$),

g. optimizing (S8) a semantic loss ($\mathcal{L}_{sem-refine}$) function of the 3D occupancy prediction network as a binary cross entropy applied on patches ( $S_i'(u_i')$ ) and reconstructed patches ( $\hat{S}_i'(u_i')$ ) of said selected pixels

h. optimizing (S9) a depth supervision loss ($\mathcal{L}_{depth}$) function by refining the absolute depth information ($D_{target}$) on a rendered depth map $(\widehat{D})$ ,. wherein obtaining, from said relative depth information, an absolute depth information ($D_{target}$) of said target image ($I_{target}$), is performed using two convolutional layers trained in a self-supervised way using a photometric re-projection loss between said target image and said reconstructed target image.

**2.** The method of claim 1 wherein said patches are obtained using the same sampling probability on all the classes of said semantic information.

**3.** The method of any of claims 1 or 2 comprising computing a final loss equal to the weighted sum of said semantic loss, said depth supervision loss, a photometric discrepancy loss, and a regularization loss.

**4.** The method of any of claims 1 to 3 wherein obtaining said reconstructed target image comprises:

- projecting 2D pixels of said target image to 3D points using said absolute depth information, and parameters of a camera used for obtaining said target image,
- projecting said 3D points on said source image to associate with said 3D points, colors of said corresponding source image projected points, for obtaining said reconstructed target image.

**5.** A method for determining 3D occupancy predictions of a scene using a 3D occupancy prediction network trained according to any of claims 1 to 4 wherein said method comprises:

- Extracting (E10) density and semantic information for 3D points of said single-view input image,
- Associating (E20) said density and semantic information with positional encodings of said 3D points,
- Obtaining (E30), spatially and cross density semantic aggregated features for each sample point, by

  o applying a density decoder of a linear trained attention model, for obtaining an intermediate density prediction, by using the semantic information of said sample point, and the density information of said sample point and of neighboring points of said sample point,
  o applying a semantic decoder of said linear trained attention model, for obtaining an intermediate semantic prediction, by using the density information of said sample point, and the semantic information of said sample point and of neighboring points of said sample point,

- inputting said obtained intermediate density prediction to the at least one output layer of said density decoder to obtain said density prediction for said sample point,
- inputting said obtained intermediate semantic prediction to the at least one output layer of said semantic decoder to obtain said semantic prediction for said sample point.

**6.** The method of claim 5 wherein applying a linear attention model in a density decoder of said attention model, for obtaining an intermediate density prediction, comprises

• selecting either as keys (K) or values (V) of said linear attention model of the density decoder, the semantic information of said sample point, and
• taking for query (Q) of said attention model and for the non selected keys (K) or values (V) of said linear attention model of the density decoder, the density information of said sample point and of neighboring points of said sample points,

**7.** The method of any of claims 5 or 6 wherein applying a linear attention model in a semantic decoder of said attention model, for obtaining an intermediate semantic prediction, comprises

• selecting either as keys (K) or values (V) of said linear attention model of the semantic decoder, the density information of said sample point, and
• taking as query (Q) of said linear attention model and for the non selected keys (K) or values (V) of said linear attention model of the semantic decoder, the semantic information of said sample point and of neighboring points of said sample points,

**8.** The method of any of claims 5 to 7 wherein extracting density information for 3D points of said single-view input image is performed using a training method comprising:

- Obtaining (E11) pre-trained parameters (weights) $\theta_d$ of a foundation model trained for depth-estimation of an image,
- Removing (E12) the last convolution layer of said trained foundation model,
- Re-training (E13) of said foundation model without said last convolution layer to obtain new parameters $\theta'_d$,
- Obtaining (E14) said density information of said input image using said re-trained foundation model,

**9.** The method of claim 8 wherein extracting density and semantic information for 3D points of said single-view input image, comprises

- Obtaining (E15) said semantic information by applying a semantic segmentation encoder to said input image,
- Applying (E16) a convolutional layer to a concatenation of said obtained semantic information and said obtained density information to obtain a fused density-semantic information of said input image.

**10.** The method of any of claims 8 to 9 further comprising associating said obtained fused density-semantic information with positional encodings of said 3D points.

**11.** The method of any of claims 5 to 10 wherein said method is implemented using a neural Radiance fields network.

**12.** A method for generating an autonomous driving system comprising:

- receiving sensor data from one or more sensors mounted on a vehicle,
- processing the received sensor data using a method for determining 3D occupancy predictions of a scene according to any of claims 5 to 11, to generate a three-dimensional representation of the surrounding environment, the representation including occupancy probabilities for spatial locations within a predefined detection range and semantic labels for occupied regions of the 3D space to differentiate objects of the scene,
- computing a motion planning strategy based on the predicted 3D occupancy and associated semantic labels, wherein the strategy accounts for dynamic and static obstacles;
- generating control signals for the vehicle based on the computed motion planning strategy to enable autonomous navigation while avoiding collisions; and
- continuously updating the 3D occupancy prediction and motion planning strategy in real-time as new sensor data is received.

**13.** A computer program set including instructions for executing the steps of the methods of any one of claims 1 to 11 when said program set is executed by at least one computer.

**14.** A recording medium readable by at least one computer and having recorded thereon at least one computer program including instructions for executing the steps of the methods of any one of claims 1 to 11.

E10
Extracting density and semantic information
E20
Associating said density and semantic information with positional encodings of said 3D points
E30
applying a linear attention model in a density decoder
Cross-task attention
applying a linear attention model in a semantic decoder
E40
Occupancy map

FIG.1

Obtaining a pre-trained depth estimation foundation model
E11
E10
Removing last layer of said pre-trained depth estimation foundation model
E12
Retraining said modified depth estimation foundation model
E13
E14
E15
Obtaining semantic information from a frozen off-the-shelf semantic segmentation network
Obtaining density distribution of input image with said re-trained depth estimation foundation model
E16
$F = conv(concat(F_d, F_s))$

FIG.2

E31
E32
E33
F'
pointwise feats
&
pos. embedding
linear
ReLU
linear
ReLU
$F_d$'
$F_s$'
linear
linear
linear
linear
linear
linear
Q
V
K
K
Q
V
attn
attn
$F_d^{attn}$
$F_s^{attn}$
spatially &
cross-task
aggregated
feats
spatially &
cross-task
aggregated
feats
linear
LayerNorm
linear
LayerNorm
density predictions
semantic predictions

FIG.3

100
110
depth
anything
$\theta'_d$
150
160
130
density
decoder $\phi_D$
σ
thresholding
occupancies
single-view
input
fusion
shared
volumetric
features
sampled feats
&
pos. encoding
spatial & cross-task
attention
2D
semantic
segmenter
$\theta_s$
semantic
decoder $\phi_s$
s
120
140

FIG.4

S1
Obtaining a plurality of input images
S2
Obtaining a trained depth estimation module
S3
Extracting relative depth information
S4
Applying two trained convolutional layers
S5
Obtaining a reconstructed target image
S6
Obtaining semantic information
S7
Selecting pixels
S8
optimizing semantic loss function
S9
optimizing depth supervision loss function

FIG.5

200
single-view input
110
depth anything $\theta_d$
120
2D semantic segmenter $\theta_s$
150
fusion
160
shared volumetric features
sampled feats & pos. encoding
130
density decoder $\varphi_D$
140
semantic decoder $\varphi_S$
spatial & cross-task attention
σ
s
thresholding
occupancies
$\mathcal{L}_{depth}$
$\mathcal{L}_{sem-refine}$
Training-time Only
depth guidance loss
image synthesis loss
multi-view images
111
depth anything $\theta_d$
2D semantic segmenter $\theta_s$
170
adaptor
adapted metric depth
depth-guided refine
refined semantics
class-balanced semantic rendering loss

FIG.6

T1
Receiving sensor data
T2
processing the received sensor data
T3
computing a motion planning strategy
T4
generating control signals for the vehicle
T5
continuously updating the 3D occupancy prediction & motion planning strategy

FIG.7

Europäisches
Patentamt
European
Patent Office
Office européen
des brevets

# EUROPEAN SEARCH REPORT

Application Number
EP 25 16 0391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG YUANHUI ET AL: "SelfOcc: Self-Supervised Vision-Based 3D Occupancy Prediction", 2024 IEEE/CVF CONFERENCE ON COMPUTER VISION AND PATTERN RECOGNITION (CVPR), IEEE, 16 June 2024 (2024-06-16), pages 19946-19956, XP034696080, DOI: 10.1109/CVPR52733.2024.01885 [retrieved on 2024-09-16] | 1-3,14, 15 | INV. G06V10/26 G06V10/764 G06V10/82 G06V20/58 G06V20/64 |
| A | * Abstract, sections 3. Proposed Approach; figures 1-3 * | 4-13 | |
| A | Azad Reza ET AL: "Loss Functions in the Era of Semantic Segmentation: A Survey and Outlook", arXiv.org, 1 December 2023 (2023-12-01), pages 1-24, XP093296882, Retrieved from the Internet: URL:https://arxiv.org/pdf/2312.05391 [retrieved on 2025-07-17] * section 2. Loss Functions in Semantic Segmentation * | 1-15 | TECHNICAL FIELDS SEARCHED (IPC) G06V |
| A | YANAN ZHANG ET AL: "Vision-based 3D occupancy prediction in autonomous driving: a review and outlook", ARXIV.ORG, CORNELL UNIVERSITY LIBRARY, 201 OLIN LIBRARY CORNELL UNIVERSITY ITHACA, NY 14853, 4 May 2024 (2024-05-04), XP091747654, * section 3.3. Voxel-based methods * | 1-15 | |

The present search report has been drawn up for all claims

1

| Place of search | Date of completion of the search | Examiner |
|---|---|---|
| The Hague | 28 July 2025 | Markaki, Vasiliki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ANH-QUAN CAO** ; **RAOUL DE CHARETTE**. Monoscene: Monocular 3d semantic scene completion. *Proceedings of the IEEE/CVF Conference on Computer Vision and Pattern Recognition*, 2022, 3991-4001
- **BOWEN CHENG** ; **MAXWELL D COLLINS** ; **YUKUN ZHU** ; **TING LIU** ; **THOMAS S HUANG** ; **HARTWIG ADAM** ; **LIANG-CHIEH CHEN**. Panoptic-deeplab: A simple, strong, and fast baseline for bottom-up panoptic segmentation. *Proceedings of the IEEE/CVF conference on computer vision and pattern recognition*, 2020, 12475-12485
- **MARIUS CORDTS, MOHAMED OMRAN, SEBASTIAN RAMOS, TIMO REHFELD, MARKUS ENZWEILER, RODRIGO BENENSON, UWE FRANKE, STEFAN ROTH, AND BERNT SCHIELE**. The cityscapes dataset for semantic urban scene understanding. *In Proceedings of the IEEE conference on computer vision and pattern recognition*, 2016, 3213-3223
- **ALEXEY DOSOVITSKIY** ; **LUCAS BEYER** ; **ALEXANDER KOLESNIKOV** ; **DIRK WEISSENBORN** ; **XIAOHUA ZHAI** ; **THOMAS UNTERTHINER** ; **MOSTAFA DEHGHANI** ; **MATTHIAS MINDERER** ; **GEORG HEIGOLD** ; **SYLVAIN GELLY et al.** An image is worth 16x16 words: Transformers for image recognition at scale.. *arXiv preprint arXiv:2010.11929*, 2020
- **DAVID EIGEN** ; **CHRISTIAN PUHRSCH** ; **ROB FERGUS**. Depth map prediction from a single image using a multi-scale deep network.. *Advances in neural information processing systems*, 2014, vol. 27
- **CL'EMENT GODARD** ; **OISIN MAC AODHA** ; **MICHAEL FIRMAN** ; **GABRIEL J BROSTOW**. Digging into self-supervised monocular depth estimation. *Proceedings of the IEEE/CVF international conference on computer vision*, 2019, 3828-3838
- **ADRIAN HAYLER** ; **FELIX WIMBAUER** ; **DOMINIK MUHLE** ; **CHRISTIAN RUPPRECHT** ; **DANIEL CREMERS**. S4c: Self-supervised semantic scene completion with neural fields.. *arXiv preprint arXiv:2310.07522*, 2023
- **KAIMING HE** ; **XIANGYU ZHANG** ; **SHAOQING REN** ; **JIAN SUN**. Deep residual learning for image recognition. *Proceedings of the IEEE conference on computer vision and pattern recognition*, 2016, 770-778
- **YUANHUI HUANG** ; **WENZHAO ZHENG** ; **YUNPENG ZHANG** ; **JIE ZHOU** ; **JIWEN LU**. Triperspective view for visionbased 3d semantic occupancy prediction. *Proceedings of the IEEE/CVF conference on computer vision and pattern recognition*, 2023, 9223-9232
- **DIEDERIK P KINGMA**. Adam: A method for stochastic optimization.. *arXiv preprint arXiv:1412.6980*, 2014
- **YIMING LI** ; **SIHANG LI** ; **XINHAO LIU** ; **MOONJUN GONG** ; **KENAN LI** ; **NUO CHEN** ; **ZIJUN WANG** ; **ZHIHENG LI** ; **TAO JIANG** ; **FISHER YU et al.** Sscbench: A large-scale 3d semantic scene completion benchmark for autonomous driving. *arXiv preprint arXiv:2306.09001*, 2023
- **YIMING LI** ; **ZHIDING YU** ; **CHRISTOPHER CHOY** ; **CHAOWEI XIAO** ; **JOSEMALVAREZ** ; **SANJA FIDLER** ; **CHEN FENG** ; **ANIMA ANANDKUMAR**. Voxformer: Sparse voxel transformer for camera-based 3d semantic scene completion. *Proceedings of the IEEE/CVF conference on computer vision and pattern recognition*, 2023, 9087-9098
- **MAXIME OQUAB** ; **TIMOTH'EE DARCET** ; **TH'EO MOUTAKANNI** ; **HUY VO** ; **MARC SZAFRANIEC** ; **VASIL KHALIDOV** ; **PIERRE FERNANDEZ** ; **DANIEL HAZIZA** ; **FRANCISCO MASSA** ; **ALAAELDIN EL-NOUBY et al.** Dinov2: Learning robust visual features without supervision.. *arXiv preprint arXiv:2304.07193*, 2023
- **MATT PHARR** ; **WENZEL JAKOB** ; **GREG HUMPHREYS.** Physically based rendering: From theory to implementation. MIT Press, 2023
- **WENWEN TONG** ; **CHONGHAO SIMA** ; **TAI WANG** ; **LI CHEN** ; **SILEI WU** ; **HANMING DENG** ; **YI GU** ; **LEWEI LU** ; **PING LUO** ; **DAHUA LIN et al.** Scene as occupancy. *Proceedings of the IEEE/CVF International Conference on Computer Vision*, 2023, 8406-8415
- **LIHE YANG** ; **BINGYI KANG** ; **ZILONG HUANG** ; **ZHEN ZHAO** ; **XIAOGANG XU** ; **JIASHI FENG** ; **HENGSHUANG ZHAO**. Depth anything v2. *arXiv preprint arXiv:2406.09414*, 2024
- **YUNPENG ZHANG** ; **ZHENG ZHU** ; **DALONG DU**. Occformer: Dual-path transformer for vision-based 3d semantic occupancy prediction. *Proceedings of the IEEE/CVF International Conference on Computer Vision*, 2023, 9433-9443